# EUROPEAN PATENT SPECIFICATION

(11) **EP 2 177 494 B1**
(45) Date of publication and mention of the grant of the patent: **26.01.2011**
(21) Application number: 09173078.8
(22) Date of filing: 14.10.2009
(51) Int. Cl.: C04B 41/71

(54) **Method for waterproofing surfaces made of cement-based material**
Verfahren zum Abdichten gegen Wasser von Oberflächen aus Material auf Zementbasis
Procédé d'imperméabilisation de surfaces fabriquées à partir de matériaux à base de ciment

(30) Priority: 15.10.2008 IT PD20080292
(43) Date of publication of application: 21.04.2010
(73) Proprietor: RPM Italia S.r.l., 36100 Vicenza (VI) (IT)
(72) Inventor: Pranovi, Sergio, I-36100, Vicenza (IT)
(74) Representative: Gallo, Luca

(56) References cited:
- CHEMICAL ABSTRACTS, vol. 107, no. 12, 21 September 1987 (1987-09-21), Columbus, Ohio, US; abstract no.: 101692k, XP000189384 & JP 62 100493 A (DAINIPPON INK & CHEMICALS) 9 May 1987 (1987-05-09)

## Description

### Field of application

The present invention regards a method for waterproofing surfaces made of cement-based material, in particular such as concrete or similar cement supports, according to the preamble of the main independent claim.

The method in question is advantageously intended to be used in the technical field of consolidating and waterproofing surfaces made using cement-based materials, in particular such as concrete or similar cement supports, with the aim of preventing degradation thereof.

### Background of the invention

Concrete and, generally, cement-based materials are building materials widely used in the building industry. The reasons why they are widely used are linked to the following characteristics: high mechanical resistance, resistance against wear, easy laying and relatively low cost.

Over the years, there has been an ever-growing concern regarding the need to further improve the properties of such materials, in particular when used for covering, enhancing durability, i.e. resistance against degradation thereof.

As a matter of fact, concrete covers are subjected to deterioration processes over time due to chemical and physical reasons. The higher the permeability of the concrete that makes up such structures, the stronger such deterioration processes are.

As known, concrete is a porous material, having open porosity, i.e. such that the pores are connected to each other making the surface permeable to water.

The process of waterproofing surfaces made of cement-based material, and in particular concrete, plays a vital role in outdoor and indoor covering and flooring.

As a matter of fact, as better explained hereinafter, not only waterproofing in this case aims at preventing water leakage from the external towards the internal of the buildings on which the covering is provided, but it also aims at preventing the moisture trapped in the concrete or underlying layers from rising towards the surface through capillarity, thus generating defects or cracks or even forming bubbles in the waterproofing cover.

Generally, when leaking into the concrete, the water carries potential aggressive agents, such as sulphates, carbon dioxide, chlorides, alkali, etc, that may be present at greater or smaller concentrations in the environment wherein the concrete is laid and which react with the cement matrix, or with the aggregates dispersed therein, or also with the reinforcement iron, causing various forms of degradation.

Interaction between sulphates and the cement mixture, for example, leads to the formation of strongly expansive compounds, such as ettringite, which cause excessive swelling of the concrete, hence leading to the formation of cracks if not even cortical detachment. Carbon dioxide, instead, which may be present in water in form of carbonic acid, reacts with the calcium carbonate present in the cement mixture forming calcium bicarbonate which, due to its high solubility in water, tends to dissolve therein causing the so-called wash-out of the cement mixture.

Chlorides, which may come into contact with the concrete in particular in the structures exposed to the action of seawater or in structures for highway works and floors that require, during winter, sprinkling unfreezing agents, causes a rapid process of oxidation in the reinforcement rods if these are not suitably protected by a waterproof concrete cover. Degradation phenomena associated to corrosion of rods are firstly a dangerous reduction of the cross-section of the rods, secondly the detachment of the concrete cover, with the ensuing complete exposure of the reinforcement rod, due to the formation, as corrosion products, of voluminous oxides.

Lastly, the alkali, in case the concrete contains alkali reactive aggregates, may lead to the alkali-reactive aggregate reaction which, over time, causes cracks of irregular forms leaking from which are white gelatinous liquids or, even, lead to the pop-out phenomenon, i.e. the discharge of small portions in form of concrete cones containing reactive aggregates

Furthermore, the water that penetrates into the pores of the concrete may, following formation of ice in cold environments, be a cause of physical degradation of the structures. As a matter of fact, the increase of volume that occurs during the solidification of water, generates - inside the cavity of the concrete - a hydraulic pressure that may exceed the tensile resistance of the material. Thus, several freezing and thawing cycles cause the degradation of the latter which first occurs through surface scaling and through disintegration of the entire material thereafter.

Given the severity of the attacks and seriousness of the consequences on the structures, it is particularly important to prevent such degradation phenomena. Regardless of the type of aggressive agent, degradation of the concrete has an impact both on the surface of the product and on the internal structure thereof.

Permeability of the concrete is a parameter for determining the durability of the material and it is particularly important especially in case of external covers and floors made of concrete which, due to their exposure to atmospheric agents (sharp temperature changes, UV rays, rain, ice etc) and their arrangement substantially on horizontal planes, are particularly subjected to degradation phenomena.

For such purpose, the research effort in the field is aimed at defining a suitable mix-design of the concrete to obtain the most compact and impermeable material as well as identifying the waterproof polymer coating that is best combined with the concrete to make covers and floors.

For example, proper selection of the initial material allows preparing concrete with low porosity capable of slowing penetration of water and the aggressive agents into the cement matrix, and thus ensuring longer durability of the structures.

In case of external covers or floors, alongside the normal physical or chemical causes of degradation, such as the ones caused by thermohygrometric variations and by aggressive environments, problems regarding mechanical stresses due to static overloads, abrasion, impacts and vibrations also arise often. This is the case for example of large uncovered areas located above large facilities for example meant for shopping centres, which serve as parking areas and must be suitably waterproofed to avoid water leakage into the internal areas but also any moisture bleeding that may generate bubbles in the covers made of waterproofing material.

Over the last decades, various methods have been conceived to protect the surface of the concrete with the aim of making it particularly resistant against possible water leakage.

Such methods mainly consist in deposition of a cover made of polymer material on the concrete surface, previously cleaned and treated using a suitable primer.

However, in the practice such methods have proven to be scarcely effective when it comes to blocking the rising to the surface of the moisture present in the concrete or in the underlying structures, which is the cause of the formation of bubbles beneath the waterproofing cover.

More in detail, the deposited coating of polymer material, as a matter of fact, adheres, due to the primer, only to the topmost layer of the floor made of concrete, i.e. up to 2-5 mm, which corresponds to the maximum depth reached by the primer. Upon variation of the thermohygrometric conditions, and, in particular, when, during the hottest seasons, the floor is hit by the sun rays, the water trapped inside the pores provided in the concrete, as well as the water and moisture absorbed from the concrete by the underlying layers, tends to evaporate and find an exit to the surface. However, as the surface coating is waterproof, water is not free to exit from the surface in form of vapour and it remains trapped in the concrete, beneath the coating. When the vapour tension, i.e. the pressure exerted by the evaporating water, is such to exert pressure on the topmost layer of the concrete, perfectly adhered to the waterproofing coating, exceeding the tensile strength of the concrete itself, bubbles are formed beneath the coating due to the detachment of some zones of a thin surface layer of concrete alongside the polymer coating. Beside being aesthetically inconvenient, such formation of bubbles jeopardises the efficiency of the waterproofing coating over time, in that the latter may easily tear and crack due to the external mechanical stresses in the zones where it rises, thus letting water leak in.

JP 62 100 493 A discloses a process for waterproofing cement-based materials comprising coating with a Na silicate based sealant, drying and coating with an acrylic resin.

The problem described above is particularly severe in case of large waterproofed surfaces with polymer covering, whose moisture, not having the possibility to vent, may easily lead to the formation of considerably large bubbles.

### Disclosure of the invention

Thus, the main object of the present invention is that of overcoming the aforementioned drawbacks of the prior art, by providing a method for waterproofing surfaces made of cement-based material capable of ensuring the protection of the surfaces over time and upon variation of the thermohygrometric conditions of the environment to which the structure is exposed.

Another object of the present invention is that of providing a method for waterproofing surfaces made of cement-based material capable of making surfaces mechanically resistant.

Another object of the present invention is that of providing a method for waterproofing surfaces made of cement-based material, such method being inexpensive and implementable within a short period of time.

Another object of the present invention is that of providing a method for waterproofing surfaces made of cement-based material, such method being simple but simultaneously safe and reliable

### Brief description of the drawings

Technical characteristics of the invention, according to the abovementioned drawings, are clearly observable from the content of the claims outlined below and the advantage of the same shall be more apparent in the detailed description that follows, provided with reference to the attached drawing, wherein:

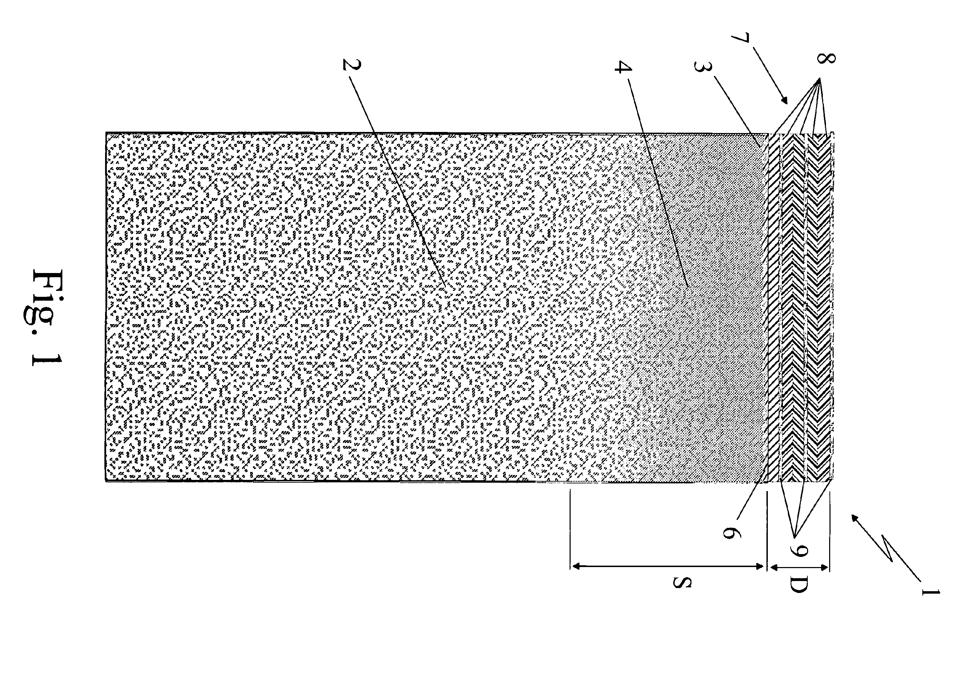

- Figure 1 shows a cross-section of a core sample made up of a concrete treated with the method subject of the present invention, with the surface layer waterproofed.

### Detailed description

With reference to the attached drawings a portion of a product made of cement-based material suitable to be treated with the waterproofing method subject of the present invention is indicated globally with 1.

Described hereinafter is the waterproofing method subject of the present invention applied to cover a large surface made of concrete of a building for making a floor of a car parking.

Obviously, without departing from the scope of protection of the present patent, the method may analogously be applied to cover any surface made of cement material both indoors and outdoors.

The method in question initially provides for a step for preparing the surface to be treated of a concrete structure 2, by means of a mechanical abrasion process suitable for providing a rough surface 3. Such method is obtained by means of sand blasting or preferably shot blasting, the latter being a surface mechanical abrasion treatment based on the sanding principle but using metal grit instead of sand.

The step for preparing the surface to be treated continues with an optional step for cleaning - by washing or degreasing using water - aimed at eliminating dusts, oils and greases.

In the case of a parking i.e. an extensively large area to be treated, conventional dilation joints, provided at regular distances, suitable to compensate possible volume variations of the concrete 3 shall be required. The grooves of the joints shall preferably be filled with an elastomer resin capable of absorbing the abovementioned volume variations of the concrete.

Perimeter sealing of drains, chimneys or other products present on the surface may be further provided for, such discontinuities being possible areas of water penetration.

Once the surface is well cleaned, according to the idea on which the present invention is based, next follows the step for consolidating the concrete 2 by depositing - on the cleaned rough surface - a consolidating solution 4 (indicated in the figure with a dark background) containing sodium silicate in aqueous solution, preferably at a percentage comprised between 20 and 60%. Sodium silicate is carried by the consolidating solution 4, preferably through a surfactant, for example comprising methyl groups, suitable to reduce the surface tension of the solution, to impregnate the concrete in a 1.5 - 3 cm deep layer indicated with S in figure 1.

Inside such layer S, sodium silicate reacts with the calcium hydroxide contained in the concrete to form a quickly vitrifying expansive gel insoluble in water conferring considerable mechanical resistance to the layer S.

During the reaction between sodium silicate and calcium hydroxide of the concrete, the hydroxide group vaporises off in such a manner to dry the impregnated layer.

Such layer S of concrete 2 is thus considerably compacted and substantially not subjected to peeling off even under considerable pressures that might be produced therein due to the vapour from the water trapped in the concrete or which rises from the underlying structures by capillarity through the free pores of the same concrete 2. Preferably, the consolidating solution 4 is applied up to saturation (i.e. up to rejection), in particular by depositing several coats through spraying techniques using low pressure pumps (for example at 0.4 -1 litres/m² to lay 500 - 600 g/m² of sodium silicate), or also using a roller or brush for smaller surfaces.

Per se known in the market are different solutions for the consolidation of the concrete in depth, such as for example the one known by the trade name Evercrete^{®} produced by Ecobeton, which are used for consolidating surfaces for polishing purposes. Such consolidation step does not allow obtaining a waterproofed surface given that water may still leak through the pores, of the cement mixture, still present even though it is now much more rigid with respect to the condition prior to the treatment using the solution containing sodium silicate. Preferably, the abovementioned consolidating solution must be laid with the surface to be treated in a moisturised condition.

Upon consolidation of the solution, thus preferably after a 12 hour resting time, carried out is a step for laying a primer 6 of the consolidated rough surface 3 suitable to penetrate into the porosity and roughness of the rough surface 3, being fixed thereonto. Lastly, there follows the step of laying the primer 6 of a waterproofing coating 7 made of elastomer resin adapted to adhere to the primer 6 to attain the complete waterproofing of the surface.

Such waterproofing is strictly linked to the concrete 2 both through the primer 6 and the consolidated layer S, thus preventing the formation, as it occurs in the prior art, of bubbles detaching from the coating with concrete layers attached thereto, due to pressures of the water vapour that is trapped in the concrete or which rises from the structures underlying the concrete 2.

The step of laying the waterproofing coating 7 is preferably obtained by depositing several layers 8 overlapped one over the other up to obtaining an overall thickness D preferably in the range of 3-6 mm also depending on the mechanical characteristics the coating is intended to be conferred with. For example, when preparing a covering to be treaded on by vehicles a coating 7 preferably having a thickness D not below 5 mm is required.

Advantageously spread on one or more layers 8 of elastomer is a layer 9 of quartz sand, which penetrates adhering to the underlying resin and it is adapted to improve the mechanical characteristics of the coating 7 and facilitate adhesion of the successive layer made of elastomer resin 8 as well as improve the grip of the exposed end surface, which conveniently acquires anti-slip features.

According to a preferred embodiment of the present invention, the elastomer resin is a resin selected from among a family comprising a methylmethacrylate base, or a polyurethane base. Preferably, the primer which serves as a bonding agent between the rough surface 3 and the first layer of resin 8 is selected of methylmethacrylate or polyurethane type according to the resin deposited subsequently.

## Claims

1. Method for waterproofing surfaces made of cement-based materials, comprising the following steps:
- a step of preparing a surface to be treated by means of a mechanical abrasion process adapted to provide a rough surface (3);
- a step of laying a primer (6) on said rough surface (3) adapted to penetrate into the porosity and the roughness of said surface, thus getting fixed thereto;
- a step of laying, on said surface treated with the primer (6), a waterproofing coating (7) made of elastomer resin adapted to adhere onto said primer (6);
**characterised in that** said step of laying said primer (6) is preceded by a step of consolidating the cement-based material by providing on said rough surface (3) a consolidating solution (4) containing sodium silicate in solution, which is carried by the consolidating solution (4) to impregnate the cement-based material in a 1.5 - 3 cm deep layer by reacting in said layer with the calcium hydroxide contained in said cement-based material forming a vitrifying expansive gel insoluble in water.

2. Method for waterproofing surfaces made of cement-based material according to claim 1, **characterised in that** said step of laying a waterproofing coating (7) made of elastomer resin is obtained by depositing several overlapped layers (8) of elastomer resin.

3. Method for waterproofing surfaces made of cement-based material according to claim 2, **characterised in that** spread on at least one resin elastomer layer (8) is a layer of quartz sand (9) adapted to improve the mechanical characteristics of the coating (7).

4. Method for waterproofing surfaces made of cement-based material according to any one of the preceding claims, **characterised in that** in said step of consolidating the cement-based material, the depositing of said consolidating solution (4) occurs up to saturation, in particular by means of depositing several coats of said consolidating solution (4).

5. Method for waterproofing surfaces made of cement-based material according to claim 4, **characterised in that** in said step of consolidating the cement-based material, the depositing of said consolidating solution (4) is carried out by spraying.

6. Method for waterproofing surfaces made of cement-based material according to any one of the preceding claims, **characterised in that** said elastomer resin is a resin selected from the family of methylmethacrylate-based resins or from the family of polyurethane resins.

7. Method for waterproofing surfaces made of cement-based material according to any one of the preceding claims, **characterised in that** said step of laying said waterproofing coating (7) made of elastomer resin is made with a final thickness of 3-6 mm.

8. Method for waterproofing surfaces made of cement-based material according to any one of the preceding claims, **characterised in that** said step of consolidating the surface is preceded by a step of moistening said surface.

9. Method for waterproofing surfaces made of cement-based material according to any one of the preceding claims, **characterised in that** in said step of preparing the surface to be treated, the mechanical abrasion process consists in sandblasting or shot-blasting.

## Patentansprüche

1. Verfahren zum Abdichten von Oberflächen aus Materialien auf Zementbasis, das die folgenden Phasen umfasst:
- eine Phase der Vorbereitung einer zu behandelnden Oberfläche durch ein mechanisches Abrasionsverfahren, das geeignet ist, eine raue Oberfläche (3) herzustellen;
- eine Phase des Auftragens einer Grundierung (6) auf diese raue Oberfläche (3), die geeignet ist, in die Poren und Aufrauungen dieser Oberfläche einzudringen und sich an sie anzuhaften;
- eine Phase des Auftragens auf die mit der Grundierung (6) behandelte Oberfläche einer wasserundurchlässigen Beschichtung (7) aus Elastomer-Harz, der geeignet ist, sich an die Grundierung (6) anzuhaften;
**dadurch gekennzeichnet, dass** der Phase des Auftragens der Grundierung (6) eine Phase der Verfestigung des Materials auf Zementbasis durch Aufbringen einer Festigungslösung (4) auf die raue Oberfläche (3) vorausgeht, die gelöstes Natriumsilikat enthält, das von der Festigungslösung (4) transportiert wird, um das Material auf Zementbasis in einer Schicht von 1,5 bis 3 cm Tiefe zu imprägnieren, indem es in dieser Schicht mit dem im Material auf Zementbasis enthaltenen Calciumhydroxid reagiert und ein wasserunlösliches vitrifizierendes expansives Gel bildet.

2. Verfahren zum Abdichten von Oberflächen aus Materialien auf Zementbasis nach Anspruch 1, **dadurch gekennzeichnet, dass** die Phase des Auftragens einer wasserundurchlässigen Beschichtung (7) aus Elastomer-Harz durch das Aufbringen mehrerer übereinanderliegender Schichten aus Elastomer-Harz (8) bewerkstelligt wird.

3. Verfahren zum Abdichten von Oberflächen aus Materialien auf Zementbasis nach Anspruch 2, **dadurch gekennzeichnet, dass** auf mindestens eine Schicht aus Elastomer-Harz (8) eine Schicht aus Quarzsand (9) aufgetragen wird, die geeignet ist, die mechanischen Eigenschaften der Beschichtung (7) zu verbessern.

4. Verfahren zum Abdichten von Oberflächen aus Materialien auf Zementbasis nach einem der vorherigen Ansprüche, **dadurch gekennzeichnet, dass** in der Phase der Verfestigung des Materials auf Zementbasis das Aufbringen der Festigungslösung (4) insbesondere durch Aufbringen mehrerer Schichten dieser Festigungslösung (4) bis zur Sättigung erfolgt.

5. Verfahren zum Abdichten von Oberflächen aus Materialien auf Zementbasis nach Anspruch 4, **dadurch gekennzeichnet, dass** in der Phase der Verfestigung des Materials auf Zementbasis das Aufbringen der Festigungslösung (4) durch Spritzen erfolgt.

6. Verfahren zum Abdichten von Oberflächen aus Materialien auf Zementbasis nach einem der vorherigen Ansprüche, **dadurch gekennzeichnet, dass** der Elastomer-Harz ein aus der Familie der Harze auf der Basis von Methacrylsäuremethylester oder aus der Familie der Polyurethanharze ausgewählter Harz ist.

7. Verfahren zum Abdichten von Oberflächen aus Materialien auf Zementbasis nach einem der vorherigen Ansprüche, **dadurch gekennzeichnet, dass** die Phase des Auftragens der wasserundurchlässigen Beschichtung (7) aus Elastomer-Harz mit einer Enddicke von 3 bis 6 mm ausgeführt wird.

8. Verfahren zum Abdichten von Oberflächen aus Materialien auf Zementbasis nach einem der vorherigen Ansprüche, **dadurch gekennzeichnet, dass** der Phase der Verfestigung der Oberfläche eine Phase der Befeuchtung dieser Oberfläche vorausgeht.

9. Verfahren zum Abdichten von Oberflächen aus Materialien auf Zementbasis nach einem der vorherigen Ansprüche, **dadurch gekennzeichnet, dass** das mechanische Abrasionsverfahren in der Phase der Vorbereitung der zu behandelnden Oberfläche im Sand- oder Kugelstrahlen besteht.

## Revendications

1. Procédé pour l'imperméabilisation de surfaces en matériaux à base de ciment, comprenant les étapes suivantes :
- une étape de préparation d'une surface à traiter au moyen d'un processus mécanique d'abrasion destiné à réaliser une surface rugueuse (3) ;
- une étape d'application d'un primer (6) sur ladite surface rugueuse (3) destiné à pénétrer à l'intérieur des porosités et rugosités de ladite surface, en se fixant à celle-ci ;
- une étape d'application sur ladite surface traitée avec le primer (6) d'un revêtement imperméabilisant (7) en résine élastomère destinée à s'accrocher audit primer (6) ;
**caractérisé en ce que** ladite étape d'application dudit primer (6) est précédée par une étape de consolidation du matériau à base de ciment par dépôt sur ladite surface rugueuse (3) d'une solution de consolidation (4) contenant du silicate de sodium en solution, lequel est véhiculé par la solution de consolidation (4) pour imprégner le matériau à base de ciment dans une couche de 1,5-3 cm de profondeur en réagissant avec ladite couche avec l'hydroxyde de calcium contenu dans ledit matériau à base de ciment en formant un gel expansif vitrifiant non soluble dans l'eau.

2. Procédé pour l'imperméabilisation de surfaces en matériaux à base de ciment selon la revendication 1, **caractérisé en ce que** ladite étape d'application d'un revêtement imperméabilisant (7) en résine élastomère est obtenue avec le dépôt de plusieurs couches superposées de résine élastomère (8).

3. Procédé pour l'imperméabilisation de surfaces en matériaux à base de ciment selon la revendication 2, **caractérisé en ce qu'**une couche de sable de quartz (9), destinée à améliorer les caractéristiques mécaniques du revêtement, est répandue sur au moins une couche de résine élastomère (8).

4. Procédé pour l'imperméabilisation de surfaces en matériaux à base de ciment selon l'une quelconque des revendications précédentes, **caractérisé en ce que**, dans ladite étape de consolidation du matériau à base de ciment, le dépôt de ladite solution de consolidation (4) est effectué jusqu'à saturation, en particulier par dépôt de plusieurs couches de ladite solution de consolidation (4).

5. Procédé pour l'imperméabilisation de surfaces en matériaux à base de ciment selon la revendication 4, **caractérisé en ce que**, dans ladite étape de consolidation du matériau à base de ciment, le dépôt de ladite solution de consolidation (4) est effectué par vaporisation.

6. Procédé pour l'imperméabilisation de surfaces en matériaux à base de ciment selon l'une quelconque des revendications précédentes, **caractérisé en ce que** ladite résine élastomère est une résine sélectionnée dans la famille des résines à base de méta-acrylate de méthyle ou dans la famille des résines polyuréthanes.

7. Procédé pour l'imperméabilisation de surfaces en matériaux à base de ciment selon l'une quelconque des revendications précédentes, **caractérisé en ce que** ladite étape d'application dudit revêtement imperméabilisant (7) en résine élastomère est réalisée avec une épaisseur finale de 3-6 mm.

8. Procédé pour l'imperméabilisation de surfaces en matériaux à base de ciment selon l'une quelconque des revendications précédentes, **caractérisé en ce que** ladite étape de consolidation de la surface est précédée par une étape d'humidification de ladite surface.

9. Procédé pour l'imperméabilisation de surfaces en matériaux à base de ciment selon l'une quelconque des revendications précédentes, **caractérisé en ce que**, dans ladite étape de préparation de la surface à traiter, le processus mécanique d'abrasion est réalisé par sablage ou grenaillage.
